# EUROPEAN PATENT APPLICATION

(11) **EP 3 389 249 A1**
(43) Date of publication of application: **17.10.2018**
(21) Application number: 16781272.6
(22) Date of filing: 05.07.2016
(51) Int. Cl.: H04M 1/725, H04M 19/04

(54) **METHOD AND SYSTEM FOR INCOMING CALL INDICATION**

(30) Priority: 07.12.2015 CN 201510888204
(71) Applicant: LE Holdings (Beijing) Co., Ltd., Beijing 100025 (CN); Lemobile Information Technology (Beijing) Co., Ltd., Beijing 101300 (CN)
(72) Inventor: LI, Tianyu, Beijing 101300 (CN)
(74) Representative: Lavoix
(86) International application number: PCT/CN2016/088537
(87) International publication number: WO 2017/096809

(57) **Abstract**

The present invention provides a call notification method and system. The method comprises: when a call is received, acquiring contact person information corresponding to a calling number; according to the contact person information, determining a basic notification level of the calling number; acquiring a count of missed calls from the calling number within a preset time; according to the count of the missed calls, determining an additional notification level; according to the basic notification level and the additional notification level, acquiring a current notification level corresponding to the current calling number; acquiring a notification manner corresponding to the current notification level; and according to the notification manner, conducting a call notification for the calling number. The method and system provided by the present invention avoids to a certain extent the situation of delaying an event because a user forgets to set a basic notification level of an important contact person to a higher level, and the current notification level determined thereby is more accurate. For each current notification level, a corresponding notification manner is selected to conduct a call notification, so that call notifications of contact persons in different notification levels are distinguished, and the user experience is good.

## Description

This application is based upon and claims priority to Chinese Patent Application No. 201510888204.8, filed on December 7, 2015, titled "Call Notification Method and System", and the entire contents of which are incorporated herein by reference.

### TECHNICAL FIELD

The present invention relates to the field of mobile communications, and particularly relates to a call notification method and system.

### Background of the Invention

With the development of the mobile communication technology and the continuous improvement of people's living standard, various kinds of mobile communication equipment have already become indispensable communication tools in people's life. As important mobile communication equipment in people's daily life, a mobile phone has a big user group. The mobile phone is generally set in a silence mode, a vibration mode, a ringing mode and other scenario modes. In general, the scenario mode of the mobile phone aims at all contact persons, that is, if the scenario mode is set to a non-silence mode, the calls and the short messages of all contact persons are both in the non-silence mode; and if the scenario mode is set to a silence mode, the calls and the short messages of all contact persons are both in the silence mode. However, many users have such a requirement that the mobile phone needs to be set in the silence mode when the user rests at night so as to avoid unnecessary disturbance, but the user hopes to receive a call as soon as possible when important persons, such as parents, etc., give calls if having urgent events.

The Chinese patent document No. CN102098371A discloses a device and method for grouping important phone numbers, and a mobile phone terminal. The device comprises: an important phone number editing unit used for editing a group of important phone numbers, incorporating important phone numbers into the group and/or removing the phone numbers from the group; an important phone number setting unit used for setting a notification manner corresponding to an important phone number; and an important phone number notification unit used for checking whether an important phone number function is enabled when a call and a short message are received, notifying a user in the notification manner set by the important phone number setting unit if the important phone number function is enabled, and performing processing in the manner set in accordance with the current scenario mode if the important phone number function is not enabled. In the device disclosed in the above-mentioned patent document, it is realized that contact persons are grouped, so that when the scenario mode of the mobile phone is a silence mode, not the calls of all the contact persons are in the silence mode. However, in the solution disclosed in the patent document, only important phone numbers and unimportant phone numbers are distinguished, that is, only important contact persons and unimportant contact persons are distinguished, and the important contact persons need to be set manually, so that this is a missing situation. Meanwhile, the degrees of importance of the important contact persons are also different in the real life, but in the patent document, the user is notified in the same manner. To sum up, the device for grouping important phone numbers disclosed in the patent document brings poor user experience.

### SUMMARY

Therefore, the technical problem to be solved in the present invention is to overcome the defect in the prior art that the device for grouping important phone numbers brings poor user experience, so that the present invention provides a call notification method and system.

Thus, the invention provides a call notification method, characterized in comprising the following steps:
when a call is received, acquiring contact person information corresponding to a calling number;
according to the contact person information, determining a basic notification level of the calling number;
acquiring a count of missed calls from the calling number within a preset time;
according to the count of the missed calls, determining an additional notification level;
according to the basic notification level and the additional notification level, acquiring a current notification level corresponding to the current calling number;
acquiring a notification manner corresponding to the current notification level; and
according to the notification manner, conducting a call notification for the calling number.

Preferably, the contact person information comprises contact person information prestored in an address book and/or historical call records corresponding to the calling number in a call log.

Preferably, the step of determining a basic notification level of the calling number according to the contact person information comprises:
according to the prestored contact person information, acquiring a prestored notification level;
according to the historical call records of the calling number, acquiring a historical notification level; and
according to the prestored notification level and the historical notification level, determining a basic notification level corresponding to the calling number.

Preferably, the step of determining an additional notification level according to the count of the missed calls comprises:
acquiring a threshold range corresponding to the count of the missed calls; and
according to the threshold range, acquiring a corresponding additional notification level.

Preferably, the method of claim 1, further comprises if a call from the calling number is not answered this time, conducting alarm clock reminding on the call event at an interval of a preset time.

The invention also provides a call notification system, comprising:
a contact person information acquiring module used for acquiring contact person information corresponding to a calling number when a call is received;
a basic notification level determining module used for determining a basic notification level of the calling number according to the contact person information;
a missed call count acquiring module used for acquiring a count of missed calls from the calling number within a preset time;
an additional notification level determining module used for determining an additional notification level according to the count of the missed calls;
a current notification level determining module used for acquiring a current notification level corresponding to the current calling number according to the basic notification level and the additional notification level;
a notification manner acquiring module used for acquiring a notification manner corresponding to the current notification level; and
a notifying module used for conducting a call notification for the calling number according to the notification manner.

Preferably, the contact person information acquired by the contact person information acquiring module comprises contact person information prestored in an address book and/or historical call records corresponding to the calling number in a call log.

Preferably, the basic notification level determining module (2) comprises:
a prestored notification level acquiring submodule used for acquiring a prestored notification level according to the prestored contact person information;
a historical notification level acquiring submodule used for acquiring a historical notification level according to the historical call records of the calling number; and
a basic notification level acquiring submodule used for determining a basic notification level corresponding to the calling number according to the prestored notification level and the historical notification level.

Preferably, the additional notification level determining module comprises
a threshold range acquiring submodule used for acquiring a threshold range corresponding to the count of the missed calls; and
an additional notification level acquiring submodule for acquiring a corresponding additional notification level according to the threshold range.

Preferably, the system further comprises a reminding module used for, if a call from the calling number is not answered this time, conducting alarm clock reminding on the call event at an interval of a preset time.

The invention further provides a call notification system, comprising one or more processors; a memory; and one or more programs, stored in the memory, and when executed by the one or more processors performing the steps of acquiring contact person information corresponding to a calling number, when a call is received; determining a basic notification level of the calling number, according to the contact person information; acquiring a count of missed calls from the calling number within a preset time; determining an additional notification level, according to the count of the missed calls; acquiring a current notification level corresponding to the current calling number, according to the basic notification level and the additional notification level; acquiring a notification manner corresponding to the current notification level; and conducting a call notification for the calling number, according to the notification manner.

The system, wherein, the contact person information comprises contact person information prestored in an address book and/or historical call records corresponding to the calling number in a call log.

The system, wherein, the step of determining a basic notification level of the calling number according to the contact person information comprises
according to the prestored contact person information, acquiring a prestored notification level; according to the historical call records of the calling number, acquiring a historical notification level; and according to the prestored notification level and the historical notification level, determining a basic notification level corresponding to the calling number.

The system, wherein, the step of determining an additional notification level according to the count of the missed calls comprises acquiring a threshold range corresponding to the count of the missed calls; and according to the threshold range, acquiring a corresponding additional notification level.

The system, wherein, further comprising if a call from the calling number is not answered this time, conducting alarm clock reminding on the call event at an interval of a preset time.

The technical solution of the present invention has the following advantages.
1. The present invention provides a call notification method and system. The method comprises: when a call is received, acquiring contact person information corresponding to a calling number; according to the contact person information, determining a basic notification level of the calling number; acquiring a count of missed calls from the calling number within a preset time; according to the count of the missed calls, determining an additional notification level; according to the basic notification level and the additional notification level, acquiring a current notification level corresponding to the current calling number; acquiring a notification manner corresponding to the current notification level; and according to the notification manner, conducting a call notification for the calling number. When having an urgent or important event, a calling contact person may generally dial a number needing to be dialed many times. However, according to the method and system of the present invention, an additional notification level is determined according to the count of the missed calls, and then a current notification level is determined according to the basic notification level and the additional notification level, so that the situation of delaying an event because a user forgets to set a basic notification level of an important contact person to a higher level is avoided to a certain extent, and the current notification level determined thereby is more accurate. Meanwhile, for each current notification level, a corresponding notification manner is selected to conduct a call notification, so that call notifications of contact persons in different notification levels are distinguished, and the user experience is good.
2. According to the call notification method and system provided by the present invention, the contact person information comprises contact person information prestored in an address book and/or historical call records corresponding to the calling number in a call log. The degree of importance of a contact person is generally decided by the following two aspects: first, user presetting; and second, historical call records. According to the method and system provided by the present invention, a prestored notification level is acquired according to the prestored contact person information; according to the historical call records of the calling number, a historical notification level is acquired; and according to the prestored notification level and the historical notification level, a basic notification level corresponding to the calling number is determined. The accuracy of the basic notification level obtained by the method and system is higher, and the intelligent degree is high and accurate because the historical call records are obtained automatically without manual operation, thereby further preventing a user from forgetting to set a prestored notification level of a certain contact person to an important level.
3. According to the call notification method and system provided by the present invention, a threshold range corresponding to the count of the missed calls is acquired; and according to the threshold range, a corresponding additional notification level is acquired. Therefore, the larger the count of calls from a certain number is, the higher the corresponding additional notification level is, so that an especially important event is further distinguished from a generally important event, and the user experience is optimized.
4. According to the call notification method and system provided by the present invention, if a call from the calling number is not answered this time, alarm clock reminding is conducted on the call event at an interval of a preset time, thereby further preventing the user from missing to answer the call.

### BRIEF DESCRIPTION OF DRAWINGS

In order to more clearly describe the technical solutions in the specific embodiments of the present invention or in the prior art, hereinafter the accompanying drawings required to be used in the description of the specific embodiments or the prior art will be briefly introduced. Apparently, the accompanying drawings described below are only directed to some embodiments of the present invention, and for those skilled in the art, without expenditure of creative labor, other drawings can be derived on the basis of these accompanying drawings.
Fig. 1 is a flow diagram of a specific example of a call notification method in embodiment 1 of the present invention;
Fig. 2 is a flow diagram of another specific example of the call notification method in embodiment 1 of the present invention;
Fig. 3 is a flow diagram of another specific example of the call notification method in embodiment 1 of the present invention;
Fig. 4 is a schematic block diagram of a specific example of a call notification system in embodiment 2 of the present invention;
Fig. 5 is a structural diagram of a call notification system with one processor in embodiment 3 of the present invention; and
Fig. 6 is a structural diagram of a call notification system with two processors in embodiment 3 of the present invention.

Reference Signs: 1-contact person information acquiring module; 2-basic notification level determining module; 3-missed call count acquiring module; 4-additional notification level determining module; 5-current notification level determining module; 6-notification manner acquiring module; 7-notifying module.

### DETAILED DESCRIPTION OF EMBODIMENTS

A clear and complete description of the technical solutions in the present invention will be given below, in conjunction with the accompanying drawings in the embodiments of the present invention. Apparently, the embodiments described below are a part, but not all, of the embodiments of the present invention. All of other embodiments, obtained by those of ordinary skill in the art based on the embodiments of the present invention without any creative effort, fall into the protection scope of the present invention.

In the description of the present invention, it needs to be noted that, the terms such as "center", "above", "below", "left", "right", "vertical", "horizontal", "outside" refer to the orientation or position relation based on the illustration of the drawings, and merely for facilitating and simplifying the description of the present invention, but not indicating or implying that the apparatus or components must have a specific orientation, or a specific configuration and operation. Thus, it should be understood as a limitation to the present invention. In addition, the terms such as "first", "second", "third" are merely for the purpose of description, but should not be understood as an indication or implication of relative importance.

In the description of the present invention, it needs to be noted that, unless specifically defined or restricted otherwise, terms "mount", "interconnect", "connect" should be broadly construed, for example, they may be fixed connection or detachable connection or integral connection; they may be mechanical connection or electrical connection; they may be direct connection, or indirect connection via an intermediate medium, or internal communication between two units; they may be wireless connection or wired connection. For those skilled in the art, the specific meaning of the aforementioned terms in the present invention can be understood according to specific situations thereof.

Furthermore, the technical features which the embodiments of the present invention provided bellow refer to can be combined with each other as long as no conflict is constituted.

### Embodiment 1

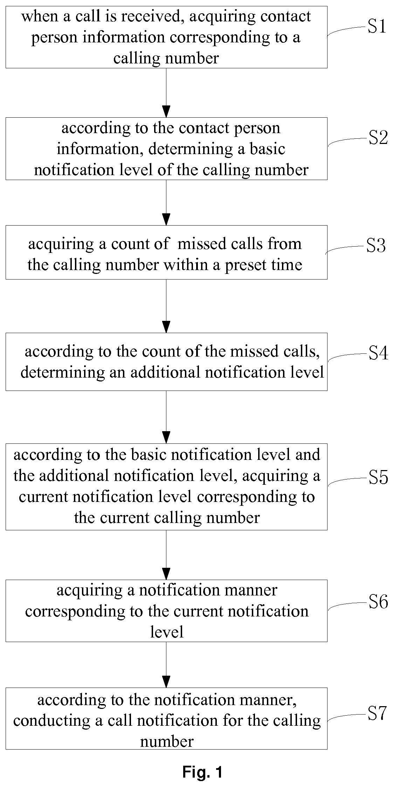

As shown in Fig. 1, this embodiment provides a call notification method, which may comprise the following steps:
S1: when a call is received, acquiring contact person information corresponding to a calling number; wherein, because the degree of importance of a contact person is generally decided by the following two aspects: first, user presetting; and second, historical call records, the obtained contact person information may comprise contact person information prestored in an address book (preset by a user) and/or historical call records corresponding to the calling number in a call log;
S2: according to the contact person information, determining a basic notification level of the calling number;

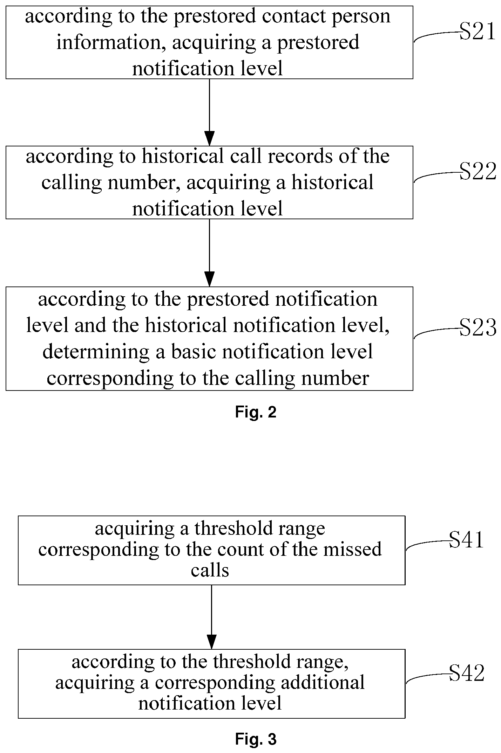

Wherein, as shown in Fig. 2, step S2 can be implemented specifically in the following manners:
S21: according to the prestored contact person information, acquiring a prestored notification level, i.e. a notification level preset by the user, for example, no ringing in the silence mode, ringing and vibration in the silence mode, no ringing in any scenario mode, and the like;
S22: according to historical call records of the calling number, acquiring a historical notification level; wherein, as a specific implementation manner, the historical notification level can be determined with historical call frequency and historical call duration; in general, it is considered that the higher the historical call frequency is and the longer the call duration is, the more important the contact person corresponding to the calling number is, that is, the higher the historical notification level is; in the actual use, a certain threshold can be set to conduct judgment, i.e. a threshold range corresponding to the historical call frequency and/or duration, and each level of threshold range corresponds to a historical notification level, specifically, the threshold range is set flexibly as required; and
S23: according to the prestored notification level and the historical notification level, determining a basic notification level corresponding to the calling number;

Wherein, the accuracy of the basic notification level obtained by steps S21 to S23 is higher, and the intelligent degree is high because the historical call records are obtained automatically without manual operation, thereby avoiding the occurrence of the situation of delaying an event because a user forgets to set a prestored notification level of a certain contact person to an important level;
S3: acquiring a count of missed calls from the calling number within a preset time; wherein, when having an urgent or important event, a call contact person may generally dial a number needing to be dialed many times, so that it is very necessary to acquire the count of the missed calls within a preset time;
S4: according to the count of the missed calls, determining an additional notification level;

Wherein, as shown in Fig. 3, step S4 can be implemented specifically in the following manners:
S41: acquiring a threshold range corresponding to the count of the missed calls; and
S42: according to the threshold range, acquiring a corresponding additional notification level;

Wherein, as a specific implementation manner, if the count of the missed calls is 0, the additional notification level is level 0; if the count of the missed calls is 1, the additional notification level is level 1; if the count of the missed calls is 2 to 3, the additional notification level is level 2; and if the count of the missed calls is greater than 3, the additional notification level is level 3; specifically, the notification level is set as required;
In general, the more urgent or more important the event is, the larger the count of calls is; and through step S41 and step S42, it is realized that the larger the count of calls from a certain number is, the higher the corresponding additional notification level is, and the additional notification levels are set hierarchically, so that an especially important event is further distinguished from a generally important event, and the user experience is optimized;
S5: according to the basic notification level and the additional notification level, acquiring a current notification level corresponding to the current calling number;

Wherein, the following beneficial effects can be brought through steps S1 to S5: first, the situation of delaying an event because a user forgets to set a basic notification level of a certain important contact person (a certain calling number) to a higher level, and the user cannot answer the call when the important contact person calls the user's mobile phone repeatedly when having an urgent event is avoided to a certain extent; second, suppose that the current scenario is that the mobile phone of the user is in a silence mode, and the basic notification level of a certain calling number is no ringing in the silence mode; and at this moment, if the additional notification level is not set, the call from the number is always in the state of silence in the silence mode, i.e., even if the contact person of the calling number has an especially important event, and repeatedly calls the user's mobile phone, the user cannot detect it; however, by setting an additional notification level, the current notification level which is finally determined can be changed to ringing in the silence mode, thereby avoiding the occurrence of the situation of delaying an important event; to sum up, the current notification level determined through steps S1 to S5 is more objective and accurate;
S6: acquiring a notification manner corresponding to the current notification level, i.e. notification manners corresponding to all current notification levels are different, for example, only ringing; only vibration; ringing and vibration; different volumes of ringing; different amplitudes of vibration; no notification in the silence mode; only vibration notification in the silence mode; ringing and vibration notification in the silence mode, and the like; wherein, this step distinguishes call notifications of contact persons in different notification levels, and the user experience is good; and
S7: according to the notification manner, conducting a call notification on the calling number.

Although the occurrence of an event of missing to answer an important call can be avoided to a maximum extent through steps S1 to S7, an unexpected event still cannot be avoided, so that after step S7, the method may further comprise: a step of conducting alarm clock reminding on the call event at an interval of a preset time if a call from the calling number is not answered this time (that is, the user misses to answer a call). This setting further prevents the user from missing to answer the call.

### Embodiment 2

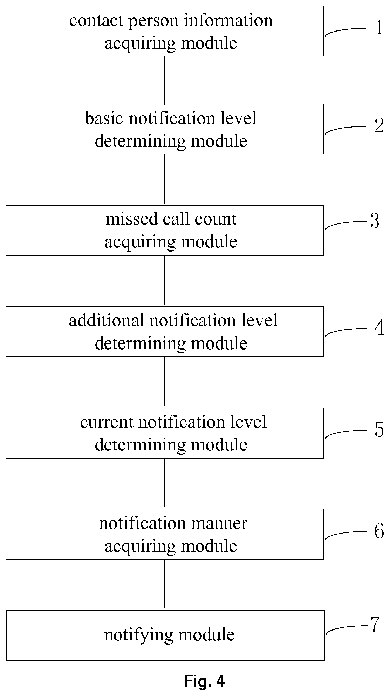

As shown in Fig. 4, this embodiment provides a call notification system, which may comprise:
a contact person information acquiring module 1 used for acquiring contact person information corresponding to a calling number when a call is received, wherein the contact person information may comprise contact person information prestored in an address book and/or historical call records corresponding to the calling number in a call log;
a basic notification level determining module 2 used for determining a basic notification level of the calling number according to the contact person information, wherein the module may further comprise:
   a prestored notification level acquiring submodule used for acquiring a prestored notification level according to the prestored contact person information,
   a historical notification level acquiring submodule used for acquiring a historical notification level according to the historical call records of the calling number, and
   a basic notification level acquiring submodule used for determining a basic notification level corresponding to the calling number according to the prestored notification level and the historical notification level,
wherein the accuracy of the basic notification level obtained by the prestored notification level acquiring submodule, the historical notification level acquiring submodule and the basic notification level acquiring submodule is higher, and the intelligent degree is high because the historical call records are obtained automatically without manual operation, thereby preventing a user from forgetting to set a prestored notification level of a certain contact person to an important level;
a missed call count acquiring module 3 used for acquiring a count of missed calls from the calling number within a preset time, wherein when having an urgent or important event, a call contact person may generally dial a number needing to be dialed many times, so that it is very necessary to acquire the count of the missed calls within a preset time;
an additional notification level determining module 4 used for determining an additional notification level according to the count of the missed calls, wherein the module may further comprise: a threshold range acquiring submodule used for acquiring a threshold range corresponding to count of the missed calls, and an additional notification level acquiring submodule used for acquiring a corresponding additional notification level according to the threshold range,
wherein, in general, the more urgent or more important the event is, the larger the count of calls is, and by the threshold range acquiring submodule and the additional notification level acquiring submodule, it is realized that the larger the count of calls from a certain number is, the higher the corresponding additional notification level is, and the additional notification level is set hierarchically, so that an especially important event is further distinguished from a generally important event, and the user experience is optimized;
a current notification level determining module 5 used for acquiring a current notification level corresponding to the current calling number according to the basic notification level and the additional notification level;
a notification manner acquiring module 6 used for acquiring a notification manner corresponding to the current notification level; and
a notifying module 7 used for conducting a call notification for the calling number according to the notification manner.

When having an urgent or important event, a call contact person may generally dial a number needing to be dialed many times. However, the system provided by this embodiment determines the current notification level according to the basic notification level and the additional notification level, thereby avoiding to a certain extent the situation of delaying an event because a user forgets to set a basic notification level of an important contact person to a higher level, and the current notification level determined thereby is more objective and accurate. Meanwhile, for each current notification level, a corresponding notification manner is selected to conduct a call notification, so that call notifications of contact persons in different notification levels are distinguished, and the user experience is good.

Based on the above-mentioned solution, the call notification system provided by this embodiment further comprises a reminding module used for conducting alarm clock reminding on the call event at an interval of a preset time if a call from the calling number is not answered this time. This setting further prevents the user from missing to answer the call.

### Embodiment 3

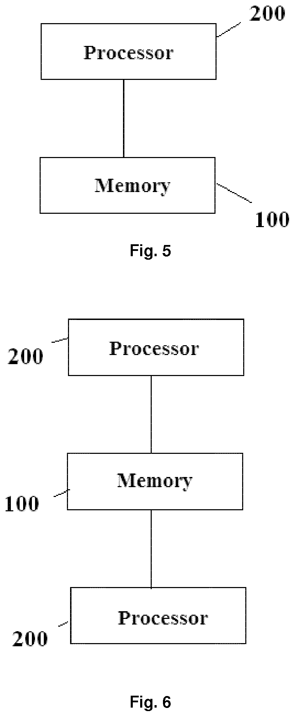

The invention further provides a call notification system, comprising one or more processors 200; a memory 100; and one or more programs, stored in the memory 100, and when executed by the one or more processors 200 performing the steps of acquiring contact person information corresponding to a calling number, when a call is received; determining a basic notification level of the calling number, according to the contact person information; acquiring a count of missed calls from the calling number within a preset time; determining an additional notification level, according to the count of the missed calls; acquiring a current notification level corresponding to the current calling number, according to the basic notification level and the additional notification level; acquiring a notification manner corresponding to the current notification level; and conducting a call notification for the calling number, according to the notification manner. Specifically, the system may include one processor 200 as illustrated in Fig.5, or include two processors 200 as illustrated in Fig.6.

In the system of the present embodiment, preferably, the contact person information comprises contact person information prestored in an address book and/or historical call records corresponding to the calling number in a call log.

In the system of the present embodiment, preferably, the step of determining a basic notification level of the calling number according to the contact person information comprises according to the prestored contact person information, acquiring a prestored notification level; according to the historical call records of the calling number, acquiring a historical notification level; and according to the prestored notification level and the historical notification level, determining a basic notification level corresponding to the calling number.

In the system of the present embodiment, preferably, the step of determining an additional notification level according to the count of the missed calls comprises acquiring a threshold range corresponding to the count of the missed calls; and according to the threshold range, acquiring a corresponding additional notification level.

In the system of the present embodiment, preferably, further comprising if a call from the calling number is not answered this time, conducting alarm clock reminding on the call event at an interval of a preset time.

It should be appreciated by those skilled in the art that the embodiments of the present invention may be provided as methods, devices or computer program products. Therefore, the present invention may adopt the form of a complete hardware embodiment, a complete software embodiment or an embodiment of software and hardware in combination. Moreover, the present invention may adopt the form of a computer program product implemented on one or more computer-useable storage media (including but not limited to a magnetic disk memory, a CD-ROM, an optic memory, and the like) containing computer-usable program codes.

The present invention is described with reference to flow charts and/or block diagrams of the methods, devices (systems) and computer program products according to the embodiments of the present invention. It should be understood that each flow step and/or block in the flow charts and/or block diagrams as well as combination of flow steps and/or blocks in the flow charts and/or block diagrams may be implemented by computer program instructions. These computer program instructions may be loaded onto a general computer, a dedicated computer, an embedded processor or a processor of other programmable data processing devices to produce a machine, so that a device for achieving functions designated in one or more flow steps of the flow charts and/or in one or more blocks of the block diagrams is produced by means of the instructions executed by the computer or the processor of other programmable data processing devices.

These computer program instructions may also be stored in a computer-readable memory capable of guiding the computer or other programmable data processing devices to work in a specific mode, so as to produce a manufactured product including an instruction device by means of the instructions stored in the computer-readable memory, and the instruction device implements the functions designated in one or more flow steps of the flow charts and/or in one or more blocks of the block diagrams.

These computer program instructions may also be loaded onto a computer or other programmable data processing devices, so that a series of operation steps are executed on the computer or other programmable devices to produce processing implemented by the computer, and the instructions executed on the computer or other programmable data processing devices provide steps for implementing the functions designated in one or more flow steps of the flow charts and/or in one or more blocks of the block diagrams.

Obviously, it should be noted that the above embodiments are merely used for illustrating rather than limiting the technical solutions of the present application; although the present applicationis illustrated in detail with reference to the aforementioned embodiments, it should be understood by those of ordinary skill in the art that modifications may still be made on the technical solutions disclosed in the aforementioned respective embodiments, or equivalent substitutions may be made to part of technical characteristics thereof; and these modifications or substitutions shall not make the nature of the corresponding technical solutions depart from the spirit and scope of the technical solutions of the respective embodiments of the present disclosure.

## Claims

1. A call notification method, **characterized in** comprising the following steps:
when a call is received, acquiring contact person information corresponding to a calling number;
according to the contact person information, determining a basic notification level of the calling number;
acquiring a count of missed calls from the calling number within a preset time;
according to the count of the missed calls, determining an additional notification level;
according to the basic notification level and the additional notification level, acquiring a current notification level corresponding to the current calling number;
acquiring a notification manner corresponding to the current notification level; and
according to the notification manner, conducting a call notification for the calling number.

2. The method of claim 1, **characterized in that** the contact person information comprises contact person information prestored in an address book and/or historical call records corresponding to the calling number in a call log.

3. The method of claim 2, **characterized in that** the step of determining a basic notification level of the calling number according to the contact person information comprises:
according to the prestored contact person information, acquiring a prestored notification level;
according to the historical call records of the calling number, acquiring a historical notification level; and
according to the prestored notification level and the historical notification level, determining a basic notification level corresponding to the calling number.

4. The method of any one of claims 1-3, **characterized in that** the step of determining an additional notification level according to the count of the missed calls comprises:
acquiring a threshold range corresponding to the count of the missed calls; and
according to the threshold range, acquiring a corresponding additional notification level.

5. The method of claim 1, **characterized in** further comprising: if a call from the calling number is not answered this time, conducting alarm clock reminding on the call event at an interval of a preset time.

6. A call notification system, **characterized in** comprising:
a contact person information acquiring module (1) used for acquiring contact person information corresponding to a calling number when a call is received;
a basic notification level determining module (2) used for determining a basic notification level of the calling number according to the contact person information;
a missed call count acquiring module (3) used for acquiring a count of missed calls from the calling number within a preset time;
an additional notification level determining module (4) used for determining an additional notification level according to the count of the missed calls;
a current notification level determining module (5) used for acquiring a current notification level corresponding to the current calling number according to the basic notification level and the additional notification level;
a notification manner acquiring module (6) used for acquiring a notification manner corresponding to the current notification level; and
a notifying module (7) used for conducting a call notification for the calling number according to the notification manner.

7. The system of claim 6, **characterized in that** the contact person information acquired by the contact person information acquiring module (1) comprises contact person information prestored in an address book and/or historical call records corresponding to the calling number in a call log.

8. The system of claim 7, **characterized in that** the basic notification level determining module (2) comprises:
a prestored notification level acquiring submodule used for acquiring a prestored notification level according to the prestored contact person information;
a historical notification level acquiring submodule used for acquiring a historical notification level according to the historical call records of the calling number; and
a basic notification level acquiring submodule used for determining a basic notification level corresponding to the calling number according to the prestored notification level and the historical notification level.

9. The system of any one of claims 6-8, **characterized in that** the additional notification level determining module (4) comprises:
a threshold range acquiring submodule used for acquiring a threshold range corresponding to the count of the missed calls; and
an additional notification level acquiring submodule for acquiring a corresponding additional notification level according to the threshold range.

10. The system of claim 6, **characterized in** further comprising: a reminding module used for, if a call from the calling number is not answered this time, conducting alarm clock reminding on the call event at an interval of a preset time.

11. A call notification system, **characterized in** comprising one or more processors; a memory; and one or more programs, stored in the memory, and when executed by the one or more processors performing the following steps of
when a call is received, acquiring contact person information corresponding to a calling number;
according to the contact person information, determining a basic notification level of the calling number;
acquiring a count of missed calls from the calling number within a preset time;
according to the count of the missed calls, determining an additional notification level;
according to the basic notification level and the additional notification level, acquiring a current notification level corresponding to the current calling number;
acquiring a notification manner corresponding to the current notification level; and
according to the notification manner, conducting a call notification for the calling number.

12. The system of claim 11, **characterized in that** the contact person information comprises contact person information prestored in an address book and/or historical call records corresponding to the calling number in a call log.

13. The system of claim 12, **characterized in that** the step of determining a basic notification level of the calling number according to the contact person information comprises:
according to the prestored contact person information, acquiring a prestored notification level;
according to the historical call records of the calling number, acquiring a historical notification level; and
according to the prestored notification level and the historical notification level, determining a basic notification level corresponding to the calling number.

14. The system of any one of claims 11-13, **characterized in that** the step of determining an additional notification level according to the count of the missed calls comprises:
acquiring a threshold range corresponding to the count of the missed calls; and
according to the threshold range, acquiring a corresponding additional notification level.

15. The system of claim 11, **characterized in** further comprising if a call from the calling number is not answered this time, conducting alarm clock reminding on the call event at an interval of a preset time.
